# EUROPEAN PATENT SPECIFICATION

(11) **EP 2 217 084 B1**
(45) Date of publication and mention of the grant of the patent: **10.08.2011**
(21) Application number: 08861880.6
(22) Date of filing: 12.12.2008
(51) Int. Cl.: A23F 3/14, A23F 3/40

(54) **TEA COMPOSITION AND PROCESS FOR THE MANUFACTURE THEREOF**
TEEZUSAMMENSETZUNG UND HERSTELLUNGSVERFAHREN DAFÜR
COMPOSITION DE THÉ ET SON PROCÉDÉ DE FABRICATION

(30) Priority: 14.12.2007 IN MU24622007; 10.04.2008 EP 08154304
(43) Date of publication of application: 18.08.2010
(73) Proprietor: Unilever PLC, London EC4Y 0DY (GB); Unilever N.V., 3013 AL Rotterdam (NL)
(72) Inventor: DOBRIYAL, Rajendra, Mohan, Bangalore 560 066 (IN); JOSHI, hem, Chandra, Bangalore 560 066 (IN); UPADHYAYA, Smitha, Ashok, Bangalore 560 066 (IN); VAISHNAV, Pankaj, Pradyumnarai, Bangalore 560 066 (IN)
(74) Representative: Keenan, Robert Daniel
(86) International application number: PCT/EP2008/010834
(87) International publication number: WO 2009/077188

(56) References cited:
- WO-A-2004/054379
- WO-A-2004/056382
- WO-A-2006/036638
- JP-A- 2007 135 494

## Description

### Technical Field of the Invention

The present invention relates to a tea composition. The invention more particularly relates to tea compositions comprising herbs which provide improved immunity to a consumer whilst the tea composition has the taste and other organoleptic properties desired by regular tea drinkers.

### Background of the Invention

People experience many stresses in their day-to-day life. Such stresses include mental pressures caused by unpleasant interactions at the workplace, in society at large and with the immediate family. Stresses on the human body are also caused by breathing polluted air and consuming contaminated water and food and by exposure to ultra-violet and other radiation. Other sources of stress includes exposure of the human body to continual changes in ambient temperature and other weather conditions. Such continuous exposure of the body to external stresses are believed to cause reduction in the immunity of the human body to diseases, whether of microbiological causes or otherwise. Modern man is on the constant lookout for ways in which his immunity can be enhanced. However, in general, people do not prefer medicinal solutions to solving the problem of reduced immunity. This is because, although medicinal solutions are believed to be effective, they are believed to cause undesirable side-effects. Thus, there is a continuing demand for "natural" solutions to such problems. The science of herbal medicine is one of the ancient sciences, which finds place in modern medical research. Examples of herbal medicine include Ayurveda in India and Traditonal Chinese Medicine in China. Herbal medicines are also believed to be effective, but many herbs and their extracts are disliked by people as they have characteristic odors and tastes, which are often unpalatable. Many of them have a very bitter taste. Therefore, many attempts have been made in the past to provide the health benefits of such herbs and their active components through various media like tablets or syrups having high levels of sweeteners. People also consider such media of intake as "medicinal" and there is resistance among consumers for their sustained intake inspite of the proven health benefits.

The present inventors have been working on the problem of providing enhanced immunity using herbs and herbal extracts. One of the problems faced is that although scores of herbs are cited in traditional medicinal system for boosting immunity, there is often a lack of scientific evidence for efficacy. Further, having demonstrated the efficacy of selected herbs, their incorporation in a food product causes problems, insofar as their acceptability in terms of taste and flavour. The present inventors have worked on incorporation of these selected herbs in tea. Incorporation in tea faces several problems. While tea is the second largest consumed beverage after water, tea drinkers are very particular about the taste and flavour that it provides. Consumer research by the inventors indicated that tea drinkers were not ready to compromise on the taste and flavour that they have been used to for several years or decades. Thus the present inventors have struggled with the contrasting demands of providing, on the one hand, enhanced immunity through a tea drink, and on the other hand, not compromising on the taste and flavour of the tea consumed.

Further, one has to be very careful that the incorporated herbs and the active components therein do not interact antagonistically with the hundreds of compounds, especially polyphenols, present in tea thereby possibly negating the desired health benefits. The health benefits desired are influenced by many physiological factors of the individuals consuming them and the benefits are therefore very difficult to measure and quantify. Hence, although one would assume that tea is a straightforward medium for incorporation of herbal health benefit agents, there are a large number of interacting factors that need to be carefully studied before arriving at a composition which not only provides the desired health benefits but is also accepted by a wide range of people.

Two of the more popular tea products are black tea and green tea. Generally, to prepare black leaf tea, fresh green leaves of the plant *Camellia sinensis* are withered (a process to allow the plucked tea leaves to lose moisture and bring about chemical / biochemical changes especially in aroma), macerated, and fermented (in which process enzymes in the tea leaf use atmospheric oxygen to oxidise various substrates to produce coloured products) followed by drying at higher temperatures (to stop the enzyme activities). Green tea is produced by not exposing the tea leaves to the fermentation process. Partial fermentation produces intermediate-type teas known as "oolong" tea.

Tea is consumed as a hot beverage or as a cold beverage (for example iced tea). The numerous compounds in the leaves that give the beverage its unique organoleptic properties are only sparingly soluble in cold water. Therefore tea is usually infused in hot water or boiling water. To get cold tea, this infusion is chilled before consumption. Cold water soluble teas are usually prepared by spray drying the liquor obtained by extraction of black tea and/or tea fibers generated during black tea manufacturing process.

US6030622 (Shehadeh, 2000) claims a herbal extract composition for stimulating cell mediated immunity comprising a mixture of an aqueous extract of Arum leaves or roots, an aqueous extract of pomegranate fruit peel, an aqueous extract of tea leaf, and an aqueous extract of hibiscus flowers, wherein said composition contains about equal portions of said extracts in amounts effective to stimulate cell mediated immunity. PCT Application WO-A-2006/036638 discloses a composition comprising black tea, an extract of Chlorophytum arundinaceum, and a flavouring agent.

Many compositions are available on the internet for such health benefits, see, for example, http://www.chakrapaniayurveda.com/ourproducts.html.

Thus, while many compositions have previously been reported and/or sold, the question about their sustained use by a large cross-section of people due to the unpleasant taste of the product remains unanswered.

It is an object of the present invention to provide for a composition that on the one hand provides immunity benefits, while on the other hand retains the generally accepted taste and other organoleptic properties of tea.

It is another object of the present invention to provide for a composition that is expected to be consumed by a large cross-section of the people on a sustained basis since it has the generally accepted taste and other organoleptic properties of tea whilst providing assured immunity benefits.

### Summary of the Invention

The present invention provides for a composition comprising:
(a) at least 80% by weight tea;
(b) 0.1 to 15% herb selected from Shankhpushpi, Shatavari, Vidarikhand and/or Arogyapacha; and
(c) 0.01 to 0.5% of a flavouring agent.

In a particularly preferred embodiment, the flavouring agent is cardamom, basil or a mixture thereof.

### Detailed description of the Invention

The invention relates to a composition that has tea and certain selected herbs and a flavouring agent, which are in selective amounts such that the composition provides enhanced immunity to the tea drinker while ensuring that the composition looks, smells and tastes like regular tea.

"Tea" for the purposes of the present invention means leaf material from *Camellia sinensis* var. *sinensis* or *Camellia sinensis* var. *assamica* and material derived therefrom. It can, for example, be black tea, green tea or oolong tea. The tea could be leaf tea, instant tea or ready-to-drink tea. Tea, as per the invention, also includes blend of two or more of any of these teas. Although any of the above teas may be used, the preferred tea is black tea, especially black leaf tea. Tea is preferably present in an amount of at least 85% by weight of the composition.

The tea that is produced by complete fermentation and that appears black/brown in color is referred to as black tea. The majority of tea produced is of this kind. Black tea manufacturing technology essentially involves disruption of the cellular integrity of tea shoots, thereby enabling the mixing of substrates (polyphenols) and the enzymes (polyphenol oxidases). This results in the initiation of a series of biochemical and chemical reactions with the uptake of atmospheric oxygen and formation of oxidized polyphenolic compounds that are characteristic of tea along with volatile flavour compounds that impart characteristic aroma to tea.

Green tea is produced by by-passing the fermentation step. The oxidizing enzymes are killed/denatured by steam blasting the freshly plucked leaf, for example in perforated trays, or by roasting it, for example in hot iron pans. The steaming is carried out for less than a minute. The leaf is then subjected to further heating and rolling until it turns dark green. The leaves are finally dried to moisture content of 3 to 4 percent. As the fermentation is arrested by the inactivation of polyphenol oxidase, the polyphenols are not oxidized and the leaves remain green. The beverage gives a weaker flavor than black tea due to the absence of theaflavins and thearubigins.

Semi fermented (Oolong) tea is also available. When the fermentation is carried out partially, the resultant teas are referred to as Oolong tea. Oolong tea is mainly consumed for its medical significance.

By instant tea is meant that tea powder which is soluble in cold water. The consumer can purchase such instant teas and dissolve in any desired amount of water at any desired temperature to prepare the tea drink. By ready-to-drink tea is meant a tea drink which has been pre-prepared and then packed as a beverage in a container. The consumer just needs to open the pack and drink the beverage at any desired temperature. As per the present invention, in the case of ready-to-drink teas, the weight percent of tea, herbs and flavouring agent is to be taken as set out in the statement of the invention without accounting for the water therein.

A large number of herbs are listed in traditional herbal medicinal books for immunity benefits. A large number of such herbs are also present in traditional medicinal preparations. However, there is little literature to verify and thereafter quantify the efficacy, if any is in fact determined to be present. The present inventors have evaluated a large number of such herbs using cell culture in-vitro assays to arrive at the herbs which provide the best efficacy. The herbs which are determined to be useful as per the present invention are Shankhpushpi, Shatavari, Vidarikhand and/or Arogyapacha.

Shankhpushpi includes the herbs *Evolvulus alsinoides, Convolvulus pluricaulis, and Clitorea turnatea.* The common name in English is Dwarf morning-glory. It is also sometimes spelt as Shankhapushpi. It is a perennial herb with prostrate branches, small elliptic to oblong leaves, and with flowers which are mostly solitary in upper axils. The whole herb has been used medicinally for fevers, nervous debility, and loss of memory. Shankhapushpi has also been used as a brain tonic. In the present invention any part of Shankhpushpi may be used.

Shatavari (sometimes spelt as Shatawari), *also known* as Shatamuli includes *the herb Asparagus racemosus.* It belongs to the family of Liliaceae. The plant is found throughout central and southern India and in lower Himalayas. The herb contains steroidal saponins. It has been traditionally used for making general tonics and is especially used as a tonic for female reproductive function and to increase lactation. Additionally it has been used for providing relief from dysentery, spasms, and also for antioxidant, immunostimulant, and antibacterial benefits. For the purposes of the present invention the preferred parts of Shatavari are tuberous roots.

Vidarikhand (also spelt as Vidaarikhand) also known as Vidari includes the herb *Ipomoea digitata.* It is also known as milky yam or alligator yam. It is a perennial climber with tuberous roots and pink or red flowers. It has been used for making general tonics, for increasing lactation and for general nutritive value. For the purposes of the present invention the preferred parts of Vidarikhand are tubers.

Arogyapacha includes the herb *Trichopus zeylanicus* that predominantly grows in southern parts of India. The fruit is usually used for medicinal purposes. This herb is believed to provide vitality and vigor to the person consuming it. Modern pharmacological studies have proven that this plant is a very effective restorative tonic. In the present invention any part of the Arogyapacha plant, although preferably the leaves, are used.

It is particularly preferred that the herbs are used in the composition of the invention in the form of aqueous extracts. A typical process of water extraction involves boiling the herb or the desired part in water in a weight ratio of about 1:8 for about 1 hour. The extract thus obtained is then dried to a moisture content of less than about 8.0% to obtain a powder. In the present invention, the herbs are preferably present as powders of the water extracts of the various herbs.

The four herbs suitable for use in the composition of the invention viz. Shankhpushpi, Shatavari, Vidarikhand and/or Arogyapacha are present in an amount in the range of 0.1 to 15%, preferably in an amount in the range of 0.5 to 10%, further more preferably in the range of 1 to 6% by weight of the composition.

An essential attribute of tea is its organo-leptic properties. Tea quality is usually evaluated on the basis of its color, aroma, taste, flavour, body, aftertaste and astringency. This evaluation is done by panelists who are trained in giving an objective description of the tea presented to them. The colour, as is visualized by the eye is described in terms of scores for four descriptors viz. bright, red, yellow and brown. Aroma is essential for good quality tea. Aroma is what is sensed by the nose. Panelists evaluate aroma in terms of scores for three descriptors viz. tea aroma, green aroma and fresh aroma. Consumer acceptability of tea is largely dependent upon the flavour of the product. The flavour is what is sensed by a combination of taste as sensed by the tongue and smell as sensed by the nose. Thus both volatile components as well as non-volatile components are responsible for flavour. Panelists evaluate flavour in terms of scores for tea flavour, green flavour and fresh flavour. Body is another parameter by which quality of tea is assessed. Body indicates the thickness or thinness of the brew as measured by visual and mouth sensory evaluation. Taste of tea is another important parameter which is sensed by the taste buds in the mouth and is effected by substantially the non-volatile components in tea. Taste is evaluated on the descriptors viz. tea taste, and bitter taste. Significantly, the aftertaste which is the taste left behind in the mouth a few minutes e.g. 2 to 5 minutes after consumption of the tea brew, is another important consumer attribute of tea. Aftertaste is measured on the tea aftertaste and bitter aftertaste descriptors. Tea drinkers also prefer a specific (usually low) level of astringency which is quantified by the panelists.

Thus, in order to have mass market appeal of any new tea composition, it is essential for tea manufacturers to preserve all of the above tea attributes while providing the health benefits of added ingredients, so that traditional tea drinkers do not reject the tea on the basis of these factors, although they now have an added incentive in that the new tea composition has enhanced health benefits.

Having tested a large number of flavouring agents, the more preferred flavouring agents as per the invention are ginger, cardamom, basil, tulsi, cinnamon, bergamont or a mixture thereof. Further more preferred flavouring agents are cardamom *(Elettaria cardamomum),* basil and/or tulsi *(Ocimum sanctum).* The flavouring agent is preferably in the form of natural oil. It is preferred that the flavouring agent is present in an amount in the range of 0.1 to 0.4% by weight of the composition. *Eletteria cardamomum* is also known as cardamom and is a common flavouring spice used in India and other countries. When cardamom is used, it is present either as a powder or an oil, preferably as oil. *Ocimum sanctum* is also commonly known as Holy basil in Europe or as Tusli in India. When *Ocimum sanctum* is present in the composition of the invention it is preferably present in the form of oil or powder form, more preferably the oil form. A highly preferred composition comprises both cardamom and tulsi.

The composition of the invention preferably comprises a food grade binder. Food grade binders suitable for use in the composition of the present invention are selected from polysaccharides, gums, polymers or a mixture thereof. Most suitable for use as a binder is a polysaccharide, preferably a mixture of polysaccharides. Most preferred polysaccharides are maltodextrins, modified starch, gum acacia or a mixture thereof.

Maltodextrin is a product obtained by controlled and partial hydrolysis of starch. It is a product midway between starch and glucose. The product thus obtained is refined by clarification, carbon treatment, ion exchange and then spray drying to a desired moisture level. Maltodextrin is a white powder which is very bland in taste with very little sweetness.

Modified starch is another useful binder which may be used in the composition of the invention. A particularly preferred modified starch is cross-linked starch where the amylase and amylopectin chains of starch get stuck together into a mesh. A most preferred modified starch for used as a binder in the present invention is HICAP 100^{®} which is a modified starch sold by National Starch and Chemicals.

Gum acacia, also called gum arabic, is a substance that is taken from two sub-Saharan species of the acacia tree, Acacia senegal and Acacia seyal. It is used primarily in the food industry as a stabilizer, but has more varied uses. Gum acacia is a complex mixture of saccharides and glycoproteins, which makes it edible. It is an important ingredient in soft drink syrups, "hard" gummy candies like gumdrops, and in marshmallows. In the past, gum acacia has been used as a traditional carrier for spray dried flavor applications.

The above binders are uniquely selected to serve a host of purposes. They serve, on the one hand to emulsify the liquid/oily additives and on the other hand serve to ensure binding of the solid additives like herb powders to the tea powder in a uniform way. The binders may also ensure some amount of encapsulation to the actives added to the composition to ensure physical and chemical stability during storage, transport and use. The total amount of binder is preferably in the range of 0.05 to 5.0 % by weight of the composition.

The composition of the invention preferably comprises not more than 8% moisture.

According to a second aspect of the present invention there is provided a process to prepare a composition comprising tea; and 0.1% to 15 weight % herb selected from Shankhpushpi, Shatavari, Vidarikhand and/or Arogyapacha; and 0.01 to 0.5% of a flavouring agent, the process comprising the step of blending tea with the herb and the flavouring agent.

A preferred process of the second aspect of the present invention comprises the steps of:
(a) dispersing a binder and the flavour agent in water to form a dispersion;
(b) blending tea with the dispersion to form a wet tea blend;
(c) blending said wet tea blend with one or more herbs selected from Shankhpushpi, Shatavari, Vidarikhand and/or Arogyapacha; and
(d) drying to a moisture content of less than 8% by weight.

Suitable temperatures for drying the wet blend to form the composition of the invention are, for example, in the range of 50 to 75°C.

Where the composition comprises leaf tea, the health benefits afforded by the composition of the invention can be derived by consuming an infusion of said composition. Infusion of said composition can be consumed black (i.e. tea without milk) or by adding milk to the infusion. Alternatively, the composition can also be infused in a mixture of water and milk, or in milk alone. This composition is also suitable for being packed in tea bags, wherein the tea is infused in cups or kettles. The composition of the invention is useful for people of any age group who want to improve their immunity.

### Source and origin of the ingredients used in developing the invention

| **Ingredient** | **Form of ingredient** | **Source and geographical origin of ingredient** |
|---|---|---|
| Tea | BROOKE BOND RED LABEL® Tea (black tea) | Hindustan Unilever Limited, India |
| Shankhpushpi | Water extract powder | Indo World Trading Corporation New Delhi (India) |
| Shatavari | Water extract powder | Indo World Trading Corporation New Delhi (India) |
| Vidarikhand | Water extract powder | Indo World Trading Corporation New Delhi (India) |
| Arogyapacha | Water extract powder | Indo World Trading Corporation New Delhi (India) |
| Cardamom | Oil | Synthite Industrial Chemicals Ltd Cochin (India) |
| Tusli | Oil | Synthite Industrial Chemicals Ltd Cochin (India) |

### Examples

The invention will now be demonstrated with examples. The examples are by way of illustration only and do not limit the scope of invention in any manner.

### Evaluation of the immunological efficacy of herbs using activation of macrophage and NK cell activity in vitro cell culture assays

Twenty-two herbs which have been used in Ayurvedic medicinal preparations which are known to have general health benefit were short-listed for a systematic study of immunity benefits using cell culture assays. The herbs short-listed for the study were *Ravding, Bhumiamlaki, Badama, Kapikachu, Twak, Mandukparni, Haridra, Guggulu, Pippali, Amlaki, Vacha, Belgiri, Ela, Sunth, Yastimadhu, Narikela, Arogyapacha, Erandamool, Vidarikhand, Shatavari and Shankhpushpi.*

The procedure to conduct the cell culture assays for the (i) activation of macrophage and (ii) NK cell activity are described below:

Materials used:
Raw 264.7, K-562 cell line were obtained from National Centre for Cellular Sciences (NCCS) Pune, India.
NK92Mi, an NK cell line was procured from ATCC.
DMEM (Dulbecos Modified Eagle Medium) RPMI (Rosewell Park Memorial Institute) medium, Fetal Bovine Serum (FBS), Horse Serum, Phorbol-12- Myristate-13-acetate (PMA), Zymosan, LPS (Lipopolysaccharide), Histopaque, Calcein- AM, Tri reagent, DNase kit and antibiotics were obtained from Sigma-Aldrich, U.S.A.
Latex bead (3µm) was procured from Polysciences Inc, Germany. Geimsa stain was obtained from S.D. Fine Chem. Ltd, India
Bovine serum albumin was bought from SRL.
Streptavidin HRP conjugate and TMB/H₂O₂ were purchased from Bangalore Genei. All cytokines were obtained from R & D system, USA. ELISA plates were purchased from Nunc, USA.
First strand cDNA synthesis kit, 10x PCR buffer, MgCl₂, 2mM dNTP mix, Taq Polymerase were obtained from MBI Fermentas, U.S.A. Sequence specific primers were designed and obtained from Microsynth (GAPDH) and Sigma Aldrich (IL12).
Primers: mouse GAPDH (F): 5'- ACGACCCCTTCATTGACC- 3'
   mouse GAPDH (R): 5'- AGACACACACAGTAGACTCCACG- 3'
   mouse IL 12 (F): 5' -TTATGTTGTAGAGGTGGACTGG- 3'
   mouse IL 12 (R): 5'-TTTCTTTGCACCAGCCATGAGC- 3'
All other reagents were of analytical grade.

### Methods:

### A. Cell culture

Raw 264.7 cell line was continuously maintained in DMEM with 10% FCS (Foetal calf serum). They were subcultured every 2-3 days and incubated at 37°C at 5% carbon dioxide atmosphere.
NK92Mi cell line was continuously maintained in MEM with α modification with 12.5% FBS and 12.5% Horse serum. They were subcultured every 2-3 days and incubated at 37°C at 5% CO2 atmosphere.
K562 cell line was continuously maintained in RPMI with 10% FCS. They were sub cultured every 2-3 days and incubated at 37°C at 5% carbon dioxide atmosphere.

### B. Priming Macrophage cell line with Plant Extracts

### (i) Preparation of Plant Extract

Desired plant material (200 mg) was weighed into 5ml of Distilled water and kept on a rotator for 2hrs at room temperature. This was boiled at 80°C for 1 hr and the volume was made up to 10ml. The supernatant was filtered through 0.22µ filter and used for further analysis.

### ii. Macrophage Engulfment Assay

Raw 264.7 cells were plated on coverslip at 10⁵ cell/ cover glass and allowed to adhere. The cells were incubated with 100ng/ml PMA (10mins) or 1mg/ml serum opsonised Zymosan for 1/2hr or 100ng/ml LPS for 1hr or 0.5% Plant extract for 2hrs. Post incubation, the cells were incubated for 2 hrs with 10⁶ latex beads/ 10⁵ cells (Cell: beads = 1:10). The cells on the coverslip were air dried and fixed with methanol. Cells were stained with Giemsa for 10mins.

### C. Cytokine Analysis

i. TNF α by ELISA - TNFα concentration in the culture supernatant was determined using sandwich ELISA. ELISA plates were coated with goat anti mouse TNFα antibodies (80ng/well in Sodium Carbonate buffer pH 10.3) overnight at 4°C. The plates were washed and blocked with 2% BSA (Bovine serum albumin) for 2hrs at room temperature. 100µl of either standard (ranging between 10ng/ml to 50ng/ml of mouse TNFα in Phosphate buffered saline with 0.1% BSA) or the culture supernatant was added. The plates were washed with PBS Tween 20 (0.05%). The detection antibody, biotinylated goat anti mouse TNFα (2ng/well) in Trizma buffered saline was incubated for 2hrs. After washing as before, the plates were incubated with streptavidin- horseradish peroxidase (HRP) conjugated anti goat IgG (1:1000) for 45mins. The plates were washed again and were incubated for 10-20mins with tetramethylbenzidine (TMB) substrate. The reaction was stopped with 1 N sulphuric acid and the intensity of the colour was measured at 450nm.

### D. Priming of Resting NK cells

### i. Isolation of T- Lymphocytes

Peripheral blood mononuclear cells were isolated by histopaque density gradient centrifugation from the venous blood of normal human volunteers.
Buffy coat (lymphocytes) was isolated from freshly drawn EDTA blood and washed with PBS (pH 7.2). The cells were then incubated in RPMI medium supplemented with 10% FCS for 1 hr at 37°C, 5% carbon dioxide.

### ii. Priming the cells

The non-attaching lymphocytes were incubated in presence or absence of IL12 (10ng/ml), IL 18 (100ng/ml) both or the culture supernatant prepared as described above in the ratio of 1:10 for 24hrs. At the end of 24hrs, the cells were assayed for their cytotoxic activity as described below.

### E. NK Cell Cytotoxic Activity Assay

The assay method used as given in (2) with modification (3). K-562 Cells were used as target cells. K-562 Cells (2X106/ml) were incubated with the dye 16µM Calcein AM at 37° C for ½ hr. K-562 cells were incubated for 4hrs with lymphocytes in a total volume of 1ml at 37°C, 5% CO2 (1:50) i.e. 1000 K-562cells: 5X105 lymphocytes. K-562 cells alone served as Control. Post incubation, the cells were centrifuged, washed twice and the fluorescence readings were taken at λ EX495nm and λ EM 530nm. Results were expressed as percentage cytolytic activity of the NK cells.

The results on macrophage engulfment assay were expressed as Phagocytosis index i.e. the total number of beads within the cells per 100 cells, and % Phagocytosis i.e. the cells that had become phagocytic (at least 1 bead/ cell) per 100 cells. At least 400 cells were counted for each experiment. The experiments indicated that the four herbs useful for the invention viz. Shankhpushpi, Shatavari, Vidarikhand and Arogyapacha had the highest phagocytosis index, % phagocytosis and TNFα values as compared to all the other herbs tested. The data for the four herbs is summarised in Table - 1. All other herbs had lower values for all the three indicators measured.

**Table - 1**

| *Plant* | *Phagocytosis index* | *% Phagocytosis* | *TNF alpha* |
|---|---|---|---|
| | *2.37* ± *1.59* | *1.34* ± *0.06* | *3.15* ± *2.06* |
| Shankhpushpi | | | |
| Shatavari | *2.33* ± *1.47* | *1.58* ± *0.06* | *3.07* ± *7.89* |
| Vidarikhand | *1.93* ± *0.43* | *2.03* ± *0.04* | *1.53* ± *0.22* |
| Arogyapacha | *1.74* ± *0.50* | *1.54* ± *0.21* | *3.18* ± *2.43* |

The NK cell cytotoxic activity for the four herbs is summarised in Table - 2

**Table - 2**

| | Basal Activity | IL12+IL18 | Vidarikhand | Arogapacha | Shankhpushpi | Shatavari |
|---|---|---|---|---|---|---|
| | *9.0* ± *3.5* | *17.1* ± *8.5* | *20.2* ± *6.6* | *21.8* ± *4.6* | *15.95* ± *2.0* | *16.97* ± *1.6* |
| % Increase in activity | - | *90* | *124.4* | *142.2* | *77.5* | *88..5* |

The data collected and summarised in Tables 1 and 2 for the four herbs as per the invention indicates that these four herbs have the highest potential for providing immunity benefits as compared to a large number of herbs indicated in the Ayurvedic literature for general health benefits.

### Selection of the flavouring agents:

Various flavouring agents were mixed with black tea containing 7.5% of Shankhpushpi, 2.5% of Shatavari, 2.5% of Vidarikhand and 2.5% of Arogyapacha. The composition was brewed and the brew was tested by a panel of 8-10 tea tasters for the flavouring agents' ability to mask the herbal flavour of the tea brewed. The data is summarised in Table - 3.

**Table - 3**

| **Example** | **Flavouring agents used** | **Comments** |
|---|---|---|
| 1 | 0.10 ginger + | Mild flavour. Only cardamom dominate the ginger & |
| | 0.1% cardamom | **the combination only marginally masked the herbal taste.** |
| 2 | 0.20 ginger + | Both Ginger & cardamom are mildly perceivable. |
| | 0.1 % cardamom | **Mildly masked the herbal taste.** |
| 3 | 0.50 ginger + | Prominent ginger node with cardamom flavor. Spicy |
| | 0.1 % cardamom | & herbal. **Not acceptable** |
| 4 | 0.10% ginger + | Slight ginger flavor with soothing Basil & Cardamom |
| | 0.1% cardamom + | nodes. **Acceptable.** |
| | 0.1% basil | |
| 5 | 0.2% cardamom + | **Marginally acceptable.** Cardamom flavour was |
| | 0.2% basil | perceivable. |
| 6 | 0.1% cardamom + | Soothing basil & cardamom. **Most acceptable** |
| | 0.2% basil | **sample.** |
| 7 | 0.1 % cardamom + | Spicy & mildly herbal. **Marginally acceptable** |
| | 0.2% cinnamon + | |
| | 0.1 % bergamont | |
| 8 | 0.2% cinnamon + | Spicy & mildly herbal. **Marginally acceptable** |
| | 0.2% bergamont | |
| 9 | 0.20% ginger + | Highly Spicy & herbal. **Not acceptable** |
| | 0.1% cardamom + | |
| | 0.1% basil + | |
| | 0.1% cinnamon + | |
| | 0.1% bergamont | |

In the above experiments ginger in the form of an oleoresin was used while the rest of the flavouring agents were in the form of an oil.

The data in Table - 3 indicates that Examples 3 and 9, outside the concentration range of the flavouring agent in the invention are not acceptable. Samples of Examples 1,2,5,7,8 are marginally acceptable and they have flavouring agent on the borderline of the concentration range claimed. Examples 4 and 6 are highly acceptable with Example 6 being most acceptable. The data also indicates that cardamom and basil oil are the most acceptable flavouring agents.

### QDA of tea samples of the invention as compared to control sample and comparative samples outside the invention

A quantitative descriptor analysis (QDA) was carried out on samples listed in Table -4.

**Table - 4**

| Examples | Herb (wt%) | Flavouring agents (wt%) | Black tea (wt%) |
|---|---|---|---|
| A | - | - | 100 |
| 10A | Shatavari (5%) | - | To 100 |
| 10 | Shatavari (5%) | Cardamom oil (0.1 %) Basil oil (0.2%) | To 100 |
| 11A | Shankhpushpi (5%) | - | To 100 |
| 11 | Shankhpushpi (5%) | Cardamom oil (0.1%) Basil oil (0.2%) | To 100 |
| 12A | Arogyapacha (5%) | - | To 100 |
| 12 | Arogyapacha (5%) | Cardamom oil (0.1%) Basil oil (0.2%) | To 100 |
| 13A | Vidarikhand (5%) | - | To 100 |
| 13 | Vidarikhand (5%) | Cardamom oil (0.1%) Basil oil (0.2%) | To 100 |

The samples comprising the herbs were prepared using the process as described below:

### Procedure to prepare encapsulated flavour emulsion:

85ml of water was taken in a beaker of 250ml capacity and 15 grams of Hi-CAP^{R} (which is a modified starch from National starch and Chemical Co) was added to it with high agitation. The flavour oils were added slowly to the mixture to form an encapsulated flavour emulsion.

### Procedure to prepare the composition:

Black tea (0.5 kg) was taken in a Hobart mixer of 2 litre capacity. The encapsulated flavour emulsion at the desired concentration of the flavouring agents were sprayed on to the tea with continuous mixing. Water was added to the tea mixture with mixing to moisten the tea and form a uniform mix. The dry blended herbs at the desired amounts were added and blended with the uniform mix. The blend was then dried in a fluidised bed drier at 70 °C to form the compositions.

### The QDA was carried out using the following procedure:

The tea for tasting by the panellists was prepared by boiling 20g of the composition, 40g of sugar and 1000ml of a water-milk mixture (60:40 weight ratio), till one full rise. The prepared tea was served to the panellists in isolated booths for evaluation.

The panellists evaluated the samples on the following descriptors.
(A) Visual appearance which includes (i) Colour (ii) bright (iii) red (iv) yellow (v) brown
(B) Aroma which includes (i) tea (ii) green (iii) fresh.
(C) Flavour which includes (i) tea (ii) green and (iii) fresh
(D) Body
(E) Taste which includes (i) tea and (ii) bitter
(F) Aftertaste which includes (i) tea aftertaste and (ii) bitter aftertaste
(G) Atringency

All of the above descriptors were graded on a scale of 1.0 to 10.0.

It was found that a few of the descriptors e.g. the appearance, body, bitter taste and astringency were not affected by the compositions prepared. The other descriptors were affected and the data on those descriptors alone are summarised in Table - 5.

**Table - 5**

| Descriptors | Examples | | | | | | | | |
|---|---|---|---|---|---|---|---|---|---|
| | A | 10A | 10 | 11A | 11 | 12A | 12 | 13A | 13 |
| Tea aroma | 3.31 | 3.12 | 3.28 | 2.84 | 2.99 | 3.11 | 3.25 | 3.04 | 3.25 |
| Green aroma | 3.48 | 3.27 | 3.8 | 2.93 | 3.10 | 3.22 | 3.37 | 3.13 | 3.50 |
| Fresh aroma | 3.56 | 3.26 | 3.59 | 3.02 | 3.31 | 3.44 | 3.59 | 3.09 | 3.47 |
| Tea flavour | 3.51 | 3.29 | 3.62 | 3.02 | 3.28 | 3.32 | 3.55 | 3.14 | 3.44 |
| Green flavour | 3.54 | 3.50 | 3.58 | 3.02 | 3.41 | 3.40 | 3.44 | 3.19 | 3.55 |
| Fresh flavour | 3.64 | 3.41 | 3.76 | 3.02 | 3.50 | 3.52 | 3.69 | 3.19 | 3.61 |
| Tea taste | 3.59 | 3.45 | 3.68 | 3.15 | 3.39 | 3.43 | 3.64 | 3.21 | 3.57 |
| Tea aftertaste | 3.26 | 3.00 | 3.40 | 2.72 | 2.97 | 3.10 | 3.34 | 2.92 | 3.10 |
| Bitter aftertaste | 0.71 | 0.66 | 0.77 | 0.80 | 0.78 | 0.74 | 0.86 | 0.78 | 0.76 |

The data in Table - 5 indicates that the compositions are negatively impacted by addition of herbs (Examples 10A, 11A, 12A and 13A) on most descriptors while addition of flavouring agents within the concentration range of the invention causes the descriptors to be brought back to the desired range as compared to black tea as control.

### Further samples within and outside the invention:

A quantitative descriptor analysis (QDA) was carried out on samples listed in Table -6.

**Table - 6**

| Examples | Herb (wt%) | Flavouring agents (wt%) | Black tea (wt%) |
|---|---|---|---|
| A | - | - | 100 |
| 14A | Shankhpushpi (5%) + | - | To 100 |
| | Arogyapacha (1.5%) + | | |
| | Vidarikhand (1.5%) | | |
| 14 | Shankhpushpi (5%) + | Cardamom oil(0.1%) | To 100 |
| | Arogyapacha (1.5%) + | Basil oil (0.2%) | |
| | Vidarikhand (1.5%) | | |
| 15A | Arogyapacha (5%) + | - | To 100 |
| | Vidarikhand (5%) | | |
| 15 | Arogyapacha (5%) + | Cardamom oil(0.1%) | To 100 |
| | Vidarikhand (5%) | Basil oil (0.2%) | |
| B | Shankhpushpi (15%) + | | To 100 |
| | Arogyapacha (5%) + | | |
| | Vidarikhand (5%) | | |
| C | Shankhpushpi (15%) + | Cardamom oil(0.1%) | To 100 |
| | Arogyapacha (5%) + | Basil oil (0.2%) | |
| | Vidarikhand (5%) | | |

The procedure to prepare the samples was as per the procedure used to prepare the samples listed in Table - 4. The samples were tested by a QDA panel and the results are summarised in Table - 7.

**Table - 7**

| Examples | Descriptors | | | | | |
|---|---|---|---|---|---|---|
| | Tea aroma | Green aroma | Fresh aroma | Tea flavour | Green flavour | Fresh flavour |
| A | 3.31 | 3.48 | 3.56 | 3.51 | 3.54 | 3.64 |
| 14A | 3.20 | 3.28 | 3.31 | 3.38 | 3.21 | 3.23 |
| 14 | 3.20 | 3.44 | 3.48 | 3.26 | 3.51 | 3.52 |
| 15A | 3.10 | 3.17 | 3.30 | 3.12 | 3.17 | 3.31 |
| 15 | 3.16 | 3.23 | 3.52 | 3.07 | 3.31 | 3.53 |
| B | 2.77 | 2.81 | 2.84 | 2.79 | 2.93 | 2.95 |
| C | 2.90 | 3.13 | 3.23 | 3.11 | 3.29 | 3.30 |

The data in Table - 7 indicates that the tea samples containing herbs (Comparative Examples 14A, 15A) were adversely affected in terms of aroma and flavour while the inclusion of flavouring agents with in the concentration range of the invention (Examples 14, 15) positively impacted most of these descriptors to make it acceptable to a normal tea drinker. Comparative Example B is a sample of tea with high amount of total herbs (25%) which is outside the concentration range of the present invention. The aroma and flavour were highly negatively impacted and even inclusion of flavouring agents (Comparative Example C) had only a marginal positive impact on the aroma and flavour of tea.

The illustrated examples thus provide for a composition that provides assured immunity benefits, while retaining the generally accepted taste and other organoleptic properties of tea. Thus the composition will be consumed by a large cross-section of regular tea drinkers.

## Claims

1. A composition comprising:
(a) at least 80% by weight tea;
(b) 0.1 to 15% by weight of herb selected from Shankhpushpi, Shatavari, Vidarikhand, Arogyapacha or a mixture thereof; and
(c) 0.01 to 0.5% by weight of a flavouring agent.

2. A composition as claimed in claim 1 wherein the flavouring agent is cardamom, basil or a mixture thereof.

3. A composition as claimed in claim 1 or claim 2 wherein the flavouring agent is a natural oil.

4. A composition as claimed in any one of the preceding claims wherein the amount of flavouring agent is from 0.1 to 0.4% by weight of the composition.

5. A composition as claimed in any one of the preceding claims wherein at least part of the herb is in the form of an aqueous extract.

6. A composition as claimed in any one of the preceding claims wherein said herb is present in 0.5 to 10% by weight of the composition.

7. A composition as claimed in any one of the preceding claims additionally comprising a food grade binder.

8. A composition as claimed in claim 7 wherein said food grade binder is present in an amount of 0.05 to 5.0 % by weight of the composition.

9. A composition as claimed in claim 7 or 8 wherein said food grade binder is a polysaccharide, gum, polymer or a mixture thereof.

10. A composition as claimed in any of the preceding claims wherein said tea is leaf tea, instant tea or ready to drink tea.

11. A composition as claimed in claim 10 wherein the tea is leaf tea.

12. A composition as claimed in any one of the preceding claims wherein the tea is black tea.

13. A process to prepare a composition according to any one of the preceding claims, the process comprising the step of blending the tea with the herb and the flavouring agent.

14. A process as claimed in claim 14 comprising the steps of:
(a) dispersing a binder and the flavour agent in water to form a dispersion;
(b) blending the tea with the dispersion to form a wet tea blend;
(c) blending said wet tea blend with one or more herbs selected from Shankhpushpi, Shatavari, Vidarikhand, and Arogyapacha; and
(d) drying to a moisture content of less than 8% by weight.

## Patentansprüche

1. Zusammensetzung, umfassend:
(a) wenigstens 80 Gewichts-% Tee;
(b) 0,1 bis 15 Gewichts-% Kraut, ausgewählt aus Shankhpushpi, Shatavari, Vidarikhand, Arogyapacha oder einem Gemisch davon, und
(c) 0,01 bis 0,5 Gewichts-% eines Aromatisierungsmittels.

2. Zusammensetzung, wie sie in Anspruch 1 beansprucht ist, wobei das Aromatisierungsmittel Kardamom, Basilikum oder ein Gemisch davon ist.

3. Zusammensetzung, wie sie in Anspruch 1 oder Anspruch 2 beansprucht ist, wobei das Aromatisierungsmittel ein natürliches Öl ist.

4. Zusammensetzung, wie sie in einem der vorangehenden Ansprüche beansprucht ist, wobei die Menge an Aromatisierungsmittel 0,1 bis 0,4 Gewichts-% der Zusammensetzung ist.

5. Zusammensetzung, wie sie in einem der vorangehenden Ansprüche beansprucht ist, wobei wenigstens ein Teil des Krauts in der Form eines wässrigen Extrakts ist.

6. Zusammensetzung, wie sie in einem der vorangehenden Ansprüche beansprucht ist, wobei das Kraut mit 0,5 bis 10 Gewichts-% der Zusammensetzung vorliegt.

7. Zusammensetzung, wie sie in einem der vorangehenden Ansprüche beansprucht ist, die zusätzlich ein Bindemittel mit Nahrungsmittelqualität umfasst.

8. Zusammensetzung, wie sie in Anspruch 7 beansprucht ist, wobei das Bindemittel mit Nahrungsmittelqualität in einer Menge von 0,05 bis 5,0 Gewichts-% der Zusammensetzung vorliegt.

9. Zusammensetzung, wie sie in Anspruch 7 oder 8 beansprucht ist, wobei das Bindemittel mit Nahrungsmittelqualität ein Polysaccharid, Gummi, Polymer oder ein Gemisch davon ist.

10. Zusammensetzung, wie sie in einem der vorangehenden Ansprüche beansprucht ist, wobei der Tee Blatttee, Instant-Tee oder trinkfertiger Tee ist.

11. Zusammensetzung, wie sie in Anspruch 10 beansprucht ist, wobei der Tee Blatttee ist.

12. Zusammensetzung, wie sie in einem der vorangehenden Ansprüche beansprucht ist, wobei der Tee schwarzer Tee ist.

13. Verfahren zur Herstellung einer Zusammensetzung gemäß einem der vorangehenden Ansprüche, wobei das Verfahren den Schritt des Mischens des Tees mit dem Kraut und dem Aromatisierungsmittel umfasst.

14. Verfahren, wie es in Anspruch 14 beansprucht ist, umfassend die Schritte:
(a) Dispergieren eines Bindemittels und des Aromatisierungsmittels in Wasser unter Bildung einer Dispersion;
(b) Mischen des Tees mit der Dispersion unter Bildung einer nassen Teemischung;
(c) Mischen der nassen Teemischung mit einem Kraut oder mehreren Kräutern, ausgewählt aus Shankhpushpi, Shatavari, Vidarikhand und Arogyapache, und
(d) Trocknen zu einem Feuchtigkeitsgehalt von weniger als 8 Gewichts-%.

## Revendications

1. Composition comprenant :
(a) au moins 80 % en poids de thé ;
(b) 0,1 à 15 % en poids d'herbe choisie parmi Shankhpushpi, Shatavari, Vidarikhand, Arogyapacha ou un mélange de celles-ci ; et
(c) 0,01 à 0,5 % en poids d'un agent aromatisant.

2. Composition selon la revendication 1, dans laquelle l'agent aromatisant est la cardamome, le basilic ou un mélange de ceux-ci.

3. Composition selon la revendication 1 ou la revendication 2, dans laquelle l'agent aromatisant est une huile naturelle.

4. Composition selon l'une quelconque des revendications précédentes dans laquelle la quantité d'agent aromatisant représente de 0,1 à 0,4 % en poids de la composition.

5. Composition selon l'une quelconque des revendications précédentes dans laquelle au moins une partie dl'herbe est sous la forme d'un extrait aqueux.

6. Composition selon l'une quelconque des revendications précédentes dans laquelle ladite herbe est présente dans une quantité de 0,5 à 10 % en poids de la composition.

7. Composition selon l'une quelconque des revendications précédentes comprenant en outre un liant alimentaire.

8. Composition selon la revendication 7, dans laquelle ledit liant alimentaire est présent dans une quantité de 0,05 à 5,0 % en poids de la composition.

9. Composition selon la revendication 7 ou 8, dans laquelle ledit liant alimentaire est un polysaccharide, une gomme, un polymère ou un mélange de ceux-ci.

10. Composition selon l'une quelconque des revendications précédentes dans laquelle ledit thé est du thé en feuilles, du thé instantané ou du thé prêt à boire.

11. Composition selon la revendication 10, dans laquelle le thé est du thé en feuilles.

12. Composition selon l'une quelconque des revendications précédentes, dans laquelle le thé est du thé noir.

13. Procédé pour préparer une composition selon l'une quelconque des revendications précédentes, le procédé comprenant l'étape consistant à mélanger le thé avec l'herbe et l'agent aromatisant.

14. Procédé selon la revendication 14, comprenant les étapes consistant à :
(a) disperser un liant et l'agent aromatisant dans de l'eau pour former une dispersion ;
(b) mélanger le thé avec la dispersion pour former un mélange de thé humide ;
(c) mélanger ledit mélange de thé humide avec une ou plusieurs herbes choisies parmi Shankhpushpi, Shatavari, Vidarikhand, et Arogyapacha ; et
(d) sécher jusqu'à une teneur en humidité inférieure à 8 % en poids.
